# EUROPÄISCHE PATENTSCHRIFT

(11) **EP 1 551 658 B1**
(45) Veröffentlichungstag und Bekanntmachung des Hinweises auf die Patenterteilung: **07.06.2006**
(21) Anmeldenummer: 03750709.2
(22) Anmeldetag: 11.10.2003
(51) Int. Cl.: B60K 1/02, B60K 17/02, B60K 17/04, B60K 17/22

(54) **FAHRZEUG MIT ELEKTRISCHEN EINZELRADANTRIEBEN**
VEHICLE EQUIPPED WITH INDIVIDUAL ELECTRIC WHEEL DRIVE TRAINS
VEHICULE POURVU D'ENTRAINEMENTS ELECTRIQUES INDIVIDUELS DES ROUES

(30) Priorität: 16.10.2002 DE 10248173
(43) Veröffentlichungstag der Anmeldung: 13.07.2005
(73) Patentinhaber: ZF FRIEDRICHSHAFEN AG, 88038 Friedrichshafen (DE)
(72) Erfinder: BOSS, Ralf, 88079 Kressbronn (DE); SORG, Johannes, 88213 Ravensburg (DE)
(86) Internationale Anmeldenummer: PCT/EP2003/011279
(87) Internationale Veröffentlichungsnummer: WO 2004/035342

(56) Entgegenhaltungen:
- DE-A- 4 434 237
- DE-A- 19 617 165
- DE-C- 4 421 425
- US-A- 5 927 417
- SCOTT D: "GERMANY PLUGS IN" POPULAR SCIENCE. ANNEE 1985 MANQUE, TIMES MIRROR MAGAZINES. NEW YORK, US, Bd. 239, Nr. 1, 1. Juli 1991 (1991-07-01), Seiten 37-38, XP000220140 ISSN: 0161-7370
- PATENT ABSTRACTS OF JAPAN vol. 017, no. 483 (M-1472), 2. September 1993 (1993-09-02) & JP 05 116541 A (AISIN AW CO LTD), 14. Mai 1993 (1993-05-14)

## Beschreibung

Die Erfindung betrifft ein Fahrzeug mit elektrischen Einzelradantrieben, insbesondere ein mehrachsgetriebenes Geländefahrzeug, mit einer Fahrzeugwanne und mindestens einem linken und einem rechten Antriebsrad, denen jeweils ein Antrieb mit mindestens einem elektrischen Antriebsmotor zugeordnet ist, wobei der Antriebsmotor, zumindest teilweise, in dem vom Antriebsrad eingenommenen axialen Bauraum radial außerhalb des Antriebsrads angeordnet ist und zur trieblichen Verbindung eines linken Antriebsmotors mit dem linken Antriebsrad ein linkes Verbindungsgetriebe und zur trieblichen Verbindung eines rechten Antriebsmotors mit dem rechten Antriebsrad ein rechtes Verbindungsgetriebe vorgesehen ist, welches auf der zur Fahrzeugmitte zugewandten Seite von Antriebsrad und Antriebsmotor angeordnet ist, und dessen Gehäuse starr mit der Fahrzeugwanne verbunden ist, wobei zwischen einem Abtrieb jedes Verbindungsgetriebes und den Antriebsradern eine Gelenkwelle vorgesehen ist, die mittels eines Gelenks mit dem Abtrieb des Verbindungsgetriebes verbunden ist.

Ein derartiges Getriebe ist aus der nicht vorveröffontlichten deutschen Patentanmeldung 102 25 731 der Anmelderin bekannt. Es zeichnet sich durch eine sehr bauraumgünstige Anordnung der elektrischen Antriebsmotoren und durch geringe ungefederte Massen der gelenkig aufgehängten Antriebsräder aus.

Allerdings kann der Ausfall eines Antriebsmotors bei einer ungünstigen Lage des Fahrzeugs im Gelände dazu führen, dass das Fahrzeug nicht weiterbewegt werden kann. Es können nämlich extreme Fahrzustände vorkommen, bei denen eine ausreichende Traktion allein durch die anderen Antriebsräder, deren Antriebsmotoren noch funktionieren, nicht mehr herstellbar ist. Darüber hinaus können bei ungleichen Traktionsverhältnissen oder bei stark geneigten Fahrstrecken Fahrsituationen vorkommen, bei denen über längere Zeit ein Antriebsrad einer Achse eine wesentlich höhere Leistung überträgt als das andere. In diesem Fall ist die installierte elektrische Antriebsleistung nicht vollständig auf die Antriebsräder übertragbar.

Aus der DE 196 17 165 A gehen elektrische Fahrmotoren hervor, die zumindest teilweise in dem vom jeweiligen Antriebsrad eingenommenen axialen Bauraum radial außerhalb des Antriebsrades angeordnet sind, siehe Deckblatt. Die Veröffentlichung SCOTT D: "GERMANY PLUGS IN" POPULAR SCIENCE. ANNEE 1985 MANQUE, TIMES MIRROR MAGAZINES. NEW YORK, US, Bd. 239, Nr. 1, 1. Juli 1991 (1991-07-01), Seiten 37-38, XP000220140 ISSN: 0161-7370, beschreibt die Verwendung getrennter Antriebsmotoren sowie von Gelenkwellen.

Die DE 44 34 237 A1 offenbart eine Fahrzeugachse mit elektrischem Einzelradantrieb für landwirtschaftliche Fahrzeuge, bei der eine Kupplung vorgesehen ist, durch welche die Einzelradantriebe einer Achse miteinander kraftschlüssig verbindbar sind. Bei dieser Fahrzeugachse sind die Antriebsmotoren, Getriebe- und Antriebsräder der linken und rechten Seite ungefedert miteinander verbunden. Die ungefederten Massen dieser Fahrzeugachse sind sehr hoch. Sie ist daher nicht für schnelle Geländefahrzeuge geeignet. Darüber hinaus ist die Anordnung der elektrischen Antriebsmotoren im Bauraum zwischen den beiden Antriebsrädern ungünstig, wenn dieser Bauraum anderweitig nutzbar sein soll.

Der Erfindung liegt daher die Aufgabe zugrunde, ein Fahrzeug mit elektrischen Einzelradantrieben der eingangs genannten Art so weiterzubilden, dass auch bei Ausfall eines Antriebsmotors das Fahrzeug geländegängig bleibt und bei dem die Antriebsmotoren gleichmäßiger belastet werden. Es soll dennoch für hohe Geschwindigkeiten im Gelände geeignet sein und der Bauraum zwischen den Antriebsrädern einer Antriebsachse soll nicht von den elektrischen Antriebsmotoren in Anspruch genommen werden.

Diese Aufgabe wird mit einem Fahrzeug mit den Merkmalen des Hauptanspruchs gelöst. Vorteilhafte Ausgestaltungen der Erfindung sind durch die Unteransprüche gegeben.

Erfindungsgemäß ist also eine schaltbare Kupplung vorgesehen, mit welcher das linke und das rechte, gegenüberliegende Antriebsrad wahlweise trieblich miteinander koppelbar sind. Im normalen Fahrbetrieb können das linke und das rechte Antriebsrad der Antriebsachse unabhängig voneinander angetrieben werden, so dass Drehzahldifferenzen bei Kurvenfahrt möglich sind. In bestimmten Fahrsituationen ist es jedoch möglich, das linke und das rechte Antriebsrad durch die schaltbare Kupplung miteinander zu koppeln. Ein erster Fall, in welchem dies Vorteile bringt ist, wenn einer der Antriebsmotoren ausfällt. Bei geschlossener Kupplung wird das Antriebsmoment des funktionierenden Motors dann auf beide Räder verteilt. Die Traktion ist verbessert und es kommt zu keinen Störungen des Geradeauslaufs. Ein zweiter Fall, in dem es vorteilhaft ist, die Kupplung zu schließen ist, wenn eines der beiden Antriebsräder einer angetriebenen Achse keine Traktion aufweist. Bei geschlossener Kupplung ist es dann möglich, die Antriebsleistung beider Antriebsmotoren auf das Rad, welches noch Traktion aufweist, zu übertragen. Auch in einer Fahrsituation, bei der ein Antriebsmotor ausfällt und das dem anderen Antriebsmotor zugeordnete Antriebsrad keine Traktion aufweist, ist das Schließen der Kupplung vorteilhaft. Auf diese Weise kann der funktionierende Antriebsmotor mit dem Antriebsrad, welches Traktion aufweist, verbunden werden, und ein Fortkommen des Fahrzeugs ist gewährleistet.

Bei einer vorteilhaften Ausgestaltung der Erfindung weisen das linke Verbindungsgetriebe und das rechte Verbindungsgetriebe ein gemeinsames Getriebegehäuse auf, in welchem außerdem auch die schaltbare Kupplung angeordnet ist. Das Getriebegehäuse ist vorzugsweise im Bereich der Fahrzeugmitte angeordnet, so dass zwischen dem Getriebegehäuse und dem linken bzw. dem rechten Antriebsrad ausreichend lange Gelenkwellen angeordnet werden können, die einen großen Einfederweg erlauben.

Soll jedoch der Bereich der Fahrzeugmitte frei von Antriebskomponenten bleiben, ist es ebenso möglich, für das linke Verbindungsgetriebe und das rechte Verbindungsgetriebe jeweils ein separates Getriebegehäuse vorzusehen. In einer vorteilhaften Weiterbildung dieser Ausführungsform ist die schaltbare Kupplung in oder an einem der separaten Getriebegehäuse angeordnet, so dass im Bereich der Fahrzeugmitte lediglich eine Welle zwischen den beiden Verbindungsgetrieben verläuft.

Die schaltbare Kupplung ist zwischen zwei einander entsprechenden Übertragungsgliedern des linken Verbindungsgetriebes und des rechten Verbindungsgetriebes angeordnet. In der Regel sind die Drehzahlen der elektrischen Antriebsmotoren höher als die Drehzahlen der Abtriebsräder. Wenn die schaltbare Kupplung zwischen einem drehfest mit dem linken Antriebsmotor verbundenen Übertragungsglied des linken Verbindungsgetriebes und einem drehfest mit dem rechten Antriebsmotor verbundenen Übertragungsglied des rechten Verbindungsgetriebes angeordnet ist, ist das maximal von der Kupplung zu übertragende Moment nicht größer als das Motormoment eines elektrischen Antriebsmotors.

Aus Bauraumgründen kann es jedoch auch vorteilhaft sein, die schaltbare Kupplung zwischen einem drehfest mit dem linken Antriebsrad verbundenen Übertragungsglied des linken Verbindungsgetriebes und einem drehfest mit dem rechten Antriebsrad verbundenen Übertragungsglied des rechten Verbindungsgetriebes anzuordnen. Schließlich kann die schaltbare Kupplung auch zwischen sich entsprechenden Zwischenrädern des linken und rechten Verbindungsgetriebes angeordnet sein.

Die Erfindung wird anhand der beiliegenden Figuren näher erläutert, welche schematisch verschiedene Ausführungsformen von Antriebsachsen mit elektrischen Einzelradantrieben zeigen.

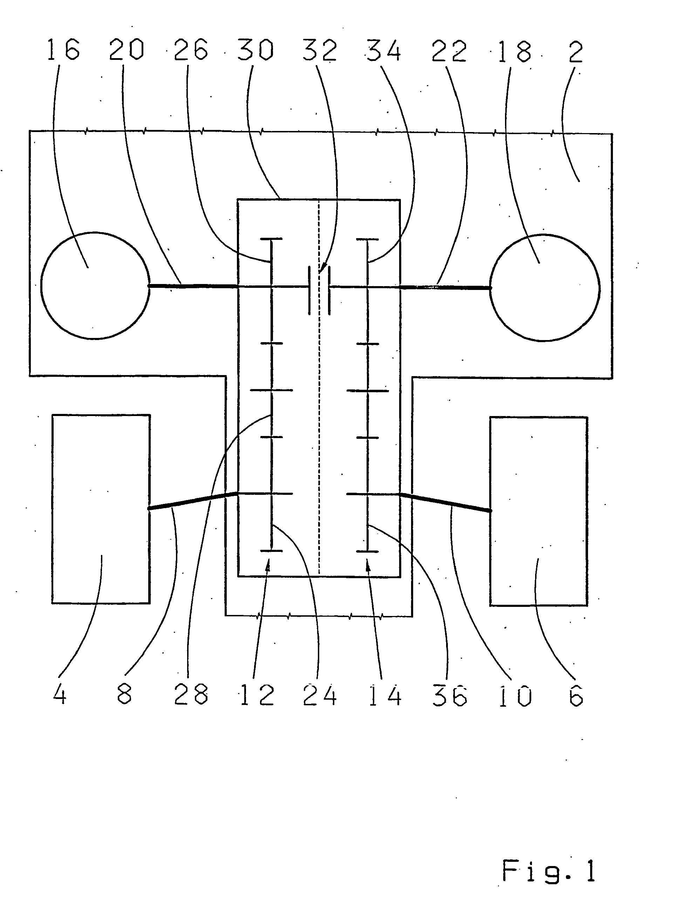

In Fig. 1 ist mit 2 ein Ausschnitt einer Fahrzeugwanne eines mehrachsgetriebenen Geländefahrzeugs bezeichnet. Das linke Antriebsrad 4 und das rechte Antriebsrad 6 einer Antriebsachse sind mittels Gelenkwellen 8, 10 gelenkig mit den Abtrieben eines linken Verbindungsgetriebes 12 und eines rechten Verbindungsgetriebes 14 verbunden, die beide als Stirnräderkette ausgebildet sind. Der linke Antriebsmotor 16 und der rechte Antriebsmotor 18 sind radial außerhalb der Antriebsräder 4, 6 angeordnet und nehmen zumindest teilweise denselben axialen Bauraum ein wie die ihnen zugeordneten Antriebsräder 4, 6. Diese Anordnung ist Gegenstand der deutschen Patentanmeldung 102 25 731 der Anmelderin. Die Eingänge des linken Verbindungsgetriebes 12 und des rechten Verbindungsgetriebes 14 stehen in ständiger trieblicher Verbindung mit den Motorwellen 20, 22 der beiden elektrischen Antriebsmotoren 16, 18. Zwischen einem abtriebsseitigen Stirnrad 24 und einem antriebsseitigen Stirnrad 26 ist bei beiden Verbindungsgetrieben 12, 14 ein Zwischenrad 28 angeordnet, welches mit den Stirnrädern 24, 26 eine Stirnräderkette bildet. Die beiden Verbindungsgetriebe 12, 14 weisen ein gemeinsames Getriebegehäuse 30 auf, in welchem auch die schaltbare Kupplung 32 angeordnet ist. Die beiden Verbindungsgetriebe 12, 14 sind mit ihrem Gehäuse 30 starr mit der Fahrzeugwanne 2 verbunden, während die Antriebsräder 4, 6 federnd aufgehängt sind. Die ungefederten Massen der Antriebsräder sind sehr gering, so dass auch bei hohen Geschwindigkeiten im Gelände gute Fahreigenschaften gewährleistet sind und die Stoßdämpfer nur relativ geringe thermische Belastungen erfahren.

Die schaltbare Kupplung 32 kann beispielsweise als hydraulische Lamellenkupplung, als synchronisierte oder unsynchronisierte Klauenkupplung ausgebildet sein. Sie ermöglicht, die linken und rechten Einzelradantriebe wahlweise miteinander zu koppeln. Sie erfüllt die Funktion einer schaltbaren Differentialsperre. Bei geschlossener Kupplung wird darüber hinaus gewährleistet, dass die von den Antriebsrädern 4, 6 übertragbare Antriebsleistung gleichmäßig auf die beiden Antriebsmotoren verteilt wird. Fällt ein Antriebsmotor 16, 18 aus, so kann das diesem Antriebsmotor zugeordnete Antriebsrad 4, 6 dennoch von dem funktionierenden Antriebsmotor angetrieben werden.

In der Ausführungsform gemäß Fig. 1 ist die schaltbare Kupplung 32 zwischen den beiden Stirnrädern 26, 34 angeord-net, welche jeweils drehfest mit den Wellen 20, 22 der beiden Antriebsmotoren 16, 18 verbunden sind.

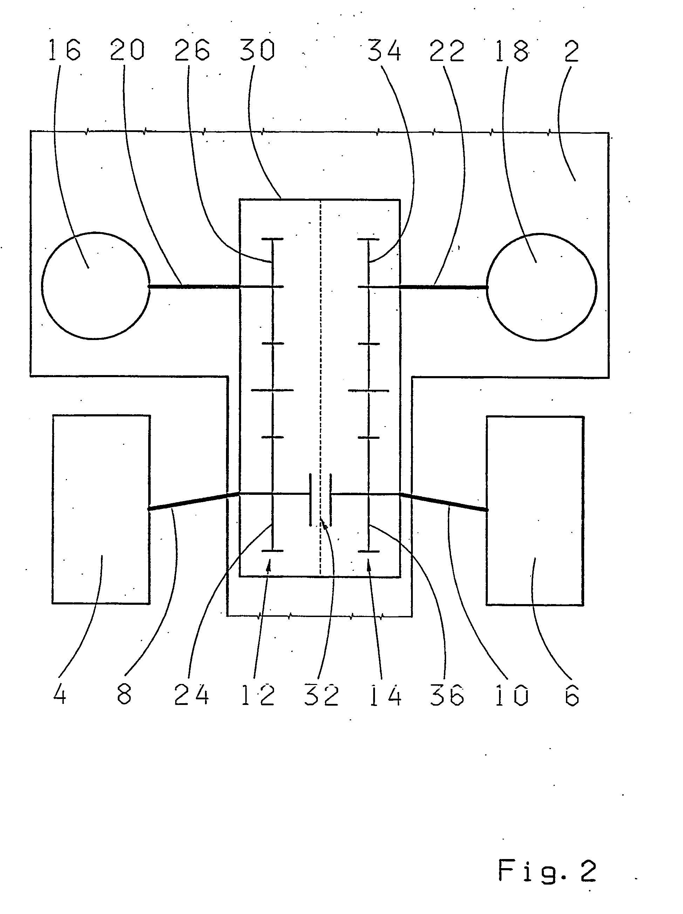

In Fig. 2 sind gleiche Positionen mit entsprechenden Bezugszeichen versehen, wie in Fig. 1. Im Unterschied zur Ausführungsform gemäß Fig. 1 ist die schaltbare Kupplung 32 zwischen dem drehfest mit dem linken Antriebsrad 4 verbundenen Stirnrad 24 des linken Verbindungsgetriebes 12 und dem drehfest mit dem rechten Antriebsrad 6 verbundenen Stirnrad 36 des rechten Verbindungsgetriebes 14 angeordnet.

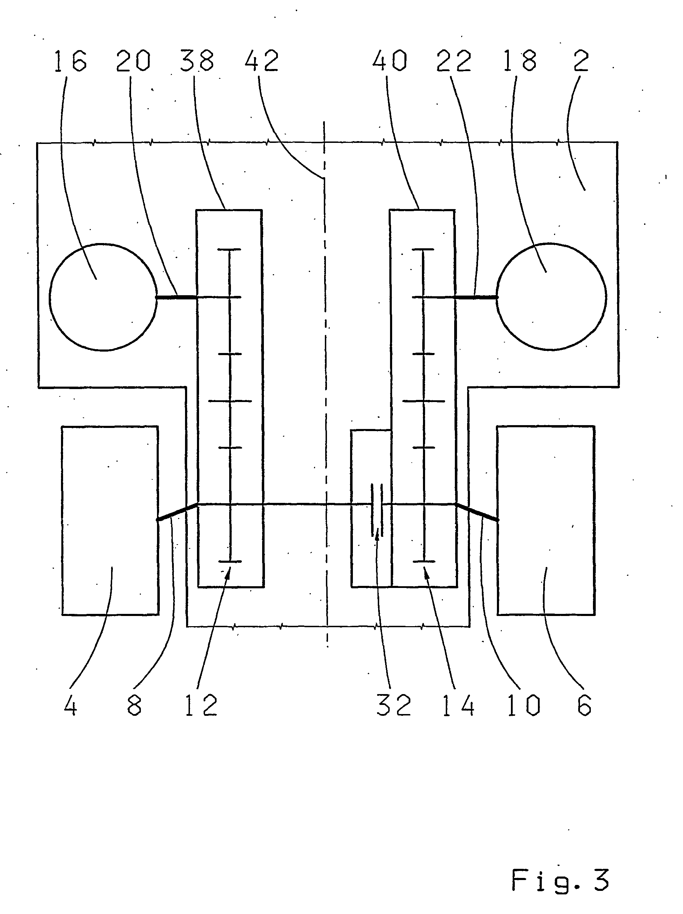

Bei der Ausführungsform gemäß Fig. 3 weist das linke Verbindungsgetriebe 12 ein Getriebegehäuse 38 und das rechte Verbindungsgetriebe 14 ein separates Getriebegehäuse 40 auf. Der Bauraum längs der Mittellinie 42 des Fahrzeugs bleibt daher weitgehend frei von Antriebskomponenten, wodurch z. B. ein niedriger Flur in einer Fahrgastzelle des Geländefahrzeugs ermöglicht wird. Die schaltbare Kupplung 32 ist an dem Gehäuse 40 des rechten Verbindungsgetriebes 14 angeordnet.

### Bezugszeichen

- 2: Fahrzeugwanne
- 4: Antriebsrad
- 6: Antriebsrad
- 8: Gelenkwelle
- 10: Gelenkwelle
- 12: Verbindungsgetriebe
- 14: Verbindungsgetriebe
- 16: elektrischer Antriebsmotor
- 18: elektrischer Antriebsmotor
- 20: Motorwelle
- 22: Motorwelle
- 24: Stirnrad
- 26: Stirnrad
- 28: Zwischenrad
- 30: Getriebegehäuse
- 32: Kupplung
- 34: Stirnrad
- 36: Stirnrad
- 38: Getriebegehäuse
- 40: Getriebegehäuse
- 42: Mittellinie

## Patentansprüche

1. Fahrzeug mit elektrischen Einzelradantrieben, insbesondere mehrachsgetriebenes Geländefahrzeug, mit einer Fahrzeugwanne (2) und mindestens einem linken und einem rechten Antriebsrad (4, 6), denen jeweils ein Antrieb mit mindestens einem elektrischen Antriebsmotor (16, 18) zugeordnet ist, wobei der Antriebsmotor (16, 18) zumindest teilweise in dem vom Antriebsrad (4, 6) eingenommenen axialen Bauraum radial außerhalb des Antriebsrads (4, 6) angeordnet ist und zur trieblichen Verbindung eines linken Antriebsmotors (16) mit dem linken Antriebsrad (4) ein linkes Verbindungsgetriebe (12) und zur trieblichen Verbindung eines rechten Antriebsmotors (18) mit einem rechten Antriebsrad (6) ein rechtes Verbindungsgetriebe (14) vorgesehen ist, welches jeweils auf der zur Fahrzeugmitte (42) zugewandten Seite von Antriebsrad (4, 6) und Antriebsmotor (16, 18) angeordnet ist, und dessen Gehäuse (30) starr mit der Fahrzeugwanne (2) verbunden ist, wobei zwischen einem Abtrieb jedes Verbindungsgetriebes (12; 14) und dem zugeordneten Antriebrad (4; 6) eine Gelenkwelle (8; 10) vorgesehen ist, die mittels eines Gelenks mit dem Abtrieb des Verbindungsgetriebes (12; 14) verbunden ist und wobei eine schaltbare Kupplung (32) vorgesehen ist, mit welcher das linke Antriebsrad (4) und das rechte, gegenüberliegende Antriebsrad (6) wahlweise trieblich miteinander koppelbar sind.

2. Fahrzeug nach Anspruch 1, **dadurch gekennzeichnet, dass** das linke Verbindungsgetriebe (12) und das rechte Verbindungsgetriebe (14) ein gemeinsames Getriebegehäuse (30) aufweisen, in welchem die schaltbare Kupplung (32) angeordnet ist.

3. Fahrzeug nach Anspruch 1, **dadurch gekennzeichnet, dass** das linke Verbindungsgetriebe (12) und das rechte Verbindungsgetriebe (14) jeweils ein separates Getriebegehäuse aufweisen.

4. Fahrzeug nach Anspruch 3, **dadurch gekennzeichnet, dass** die schaltbare Kupplung (32) in oder an einem der separaten Getriebegehäuse angeordnet ist.

5. Fahrzeug nach einem der Ansprüche 1 bis 4, **dadurch gekennzeichnet, dass** die schaltbare Kupplung (32) zwischen einem drehfest mit des Motorwelle (20) des linken Antriebsmotors (16) verbundenen Übertragungsglied (26) des linken Verbindungsgetriebes (12) und einem drehtest mit des Motorwelle (22) des rechten Antriebsmotors (18) verbundenen Übertragungsglied (34) des rechten Verbindungsgetriebes (14) angeordnet ist.

6. Fahrzeug nach einem der Ansprüche 1 bis 4, **dadurch gekennzeichnet, dass** die schaltbare Kupplung (32) zwischen einem drehfest mit dem linken Antriebsrad (4) verbundenen Übertragungsglied (24) des linken Verbindungsgetriebes (12) und einem drehfest mit dem rechten Antriebsrad (6) verbundenen Übertragungsglied (36) des rechten Verbindungsgetriebes (14) angeordnet ist.

7. Fahrzeug nach einem der Ansprüche 1 bis 4, **dadurch gekennzeichnet, dass** die schaltbare Kupplung zwischen einem Zwischenrad (28) des linken Verbindungsgetriebes (12) und einem Zwischenrad des rechten Verbindungsgetriebes (14) angeordnet ist.

## Claims

1. Vehicle with electric individual wheel drives, in particular a multi-axle driven cross-country vehicle, with a vehicle pan (2) and at least a left-hand and a right-hand driving wheel (4, 6), each of which cooperates with a respective drive with at least one electric drive motor (16, 18), and the drive motor (16, 18) is disposed at least partially in the axial mounting space occupied by the driving wheel (4, 6), radially outside the driving wheel (4, 6), and a left-hand connecting transmission (12) is provided in order to establish a driving connection of a left-hand drive motor (16) with the left-hand driving wheel (4) and a right-hand connecting transmission (14) is provided in order to establish a driving connection of a right-hand drive motor (18) with a right-hand driving wheel (6), which is disposed respectively on the side of the driving wheel (4,6) and drive motor (16, 18) directed towards the vehicle centre (42), and its housing (30) is rigidly connected to the vehicle pan (2), and an articulated shaft (8; 10) is provided between an output of each connecting transmission (12; 14) and the co-operating driving wheel (4;6), which is connected to the output of the connecting transmission (12; 14) by means of an articulated joint, and an engaging and disengaging clutch (32) is provided, by means of which the left-hand driving wheel (4) and the oppositely lying right-hand driving wheel (6) can be selectively coupled in a driving relationship with one another.

2. Vehicle a claimed in claim 1, **characterised in that** the left-hand connecting transmission (12) and the right-hand connecting transmission (14) have a common transmission housing (30), in which the engaging and disengaging clutch (32) is disposed.

3. Vehicle as claimed in claim 1, **characterised in that** the left-hand connecting transmission (12) and the right-hand connecting transmission (14) each have a separate transmission housing.

4. Vehicle as claimed in claim 3, **characterised in that** the engaging and disengaging clutch (32) is disposed in or on one of the separate transmission housings.

5. Vehicle as claimed in one of claims 1 to 4,
**characterised in that** the engaging and disengaging clutch (32) is disposed between a transmission element (26) of the left-hand connecting transmission (12) non-rotatingly connected to the motor shaft (20) of the left-hand drive motor (16) and a transmission element (34) of the right-hand connecting transmission (14) non-rotatingly connected to the motor shaft (22) of the right-hand drive motor (18).

6. Vehicle as claimed in one of claims 1 to 4,
**characterised in that** the engaging and disengaging clutch (32) is disposed between a transmission element (24) of the left-hand connecting transmission (12) non-rotatingly connected to the left-hand driving wheel (4) and a transmission element (36) of the right-hand connecting transmission (14) non-rotatingly connected to the right-hand driving wheel (6).

7. Vehicle as claimed in one of claims 1 to 4,
**characterised in that** the engaging and disengaging clutch is disposed between an intermediate gear (28) of the left-hand connecting transmission (12) and an intermediate gear of the right-hand connecting transmission (14).

## Revendications

1. Véhicule possédant des entraînements de roues individuels électriques, en particulier véhicule tout terrain à plusieurs essieux, comprenant une coque de véhicule (2) et au moins une roue motrice gauche et une roue motrice droite (4, 6) à chacune desquelles est combiné un entraînement possédant au moins un moteur d'entraînement électrique (16, 18), dans lequel le moteur d'entraînement (16, 18) est disposé au moins partiellement dans l'espace axial occupé par la roue motrice (4, 6) radialement à l'extérieur de la roue motrice (4, 6), un mécanisme de liaison gauche (12) étant prévu pour la liaison cinématique d'un moteur d'entraînement gauche (16) avec la roue motrice gauche (4) et un mécanisme de liaison droit (14) étant prévu pour la liaison cinématique entre un moteur d'entraînement droit (18) et une roue motrice droite (6), chaque mécanisme étant disposé sur le côté de la roue motrice (4, 6) et du moteur d'entraînement (16, 18) qui est dirigé vers le milieu (42) du véhicule, le carter (30) de ce mécanisme étant relié rigidement à la coque (2) du véhicule, dans lequel, entre un organe de sortie de chaque mécanisme de liaison (12; 14) et la roue motrice correspondante (4, 6), il est prévu un arbre articulé (8; 10) qui est relié à l'organe de sortie du mécanisme de liaison (12; 14) au moyen d'une articulation, et dans lequel il est prévu un embrayage commandé (32) avec lequel la roue motrice gauche (4) et la roue motrice droite (6) qui est en regard peuvent être sélectivement accouplées cinématiquement entre elles.

2. Véhicule selon la revendication 1, **caractérisé en ce que** le mécanisme de liaison gauche (12) et le mécanisme de liaison droit (14) comportent un carter de mécanisme commun (30) dans lequel l'embrayage commandé (32) est disposé.

3. Véhicule selon la revendication 1, **caractérisé en ce que** le mécanisme de liaison gauche (12) et le mécanisme de liaison droit (14) comportent chacun un carter de mécanisme séparé.

4. Véhicule selon la revendication 3, **caractérisé en ce que** l'embrayage commandé (32) est disposé dans ou sur le carter de mécanisme séparé.

5. Véhicule selon l'une des revendications 1 à 4, **caractérisé en ce que** l'embrayage commandé (32) est disposé entre un organe de transmission (26) du mécanisme de liaison gauche (12) qui est relié solidairement en rotation à l'arbre (20) du moteur d'entraînement gauche (16) et un organe de transmission (34) du mécanisme de liaison droit (14) qui est relié solidairement en rotation à l'arbre (22) du moteur d'entraînement droit (18).

6. Véhicule selon l'une des revendications 1 à 4, **caractérisé en ce que** l'embrayage commandé (32) est disposé entre un organe de transmission (24) du mécanisme de liaison gauche (12) qui est relié solidairement en rotation à la roue motrice gauche (4) et un organe de transmission (36) du mécanisme de liaison droit (14) qui est relié solidairement en rotation à la roue motrice droite (6).

7. Véhicule selon l'une des revendications 1 à 4, **caractérisé en ce que** l'embrayage commandé est disposé entre une roue intermédiaire (28) du mécanisme de liaison gauche (12) et une roue intermédiaire du mécanisme de liaison droit (14).
